(19) Europäisches Patentamt
European Patent Office
Office européen des brevets

(11)  **EP 2 552 070 B1**

(12)  **EUROPEAN PATENT SPECIFICATION**

(45) Date of publication and mention
of the grant of the patent:
**19.10.2022   Bulletin 2022/42**

(21) Application number: **12005175.0**

(22) Date of filing: **13.07.2012**

(51) International Patent Classification (IPC):
**H04L 27/00** *(2006.01)*

(52) Cooperative Patent Classification (CPC):
**H04L 27/0012**

(54) **Device and method for multimode signal acquisition**

Vorrichtung und Verfahren zur Mehrfachmodussignalerfassung

Appareil et procédé pour l'acquisition de signaux multimode

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.07.2011   US 201113190800**

(43) Date of publication of application:
**30.01.2013   Bulletin 2013/05**

(60) Divisional application:
**22194073.7**

(73) Proprietor: **Itron Networked Solutions, Inc.
San Jose, California 95134 (US)**

(72) Inventors:
• **Seibert, Cristina
Mountain View
CA 94043 (US)**

• **Shearer, Edwin
Pleasanton
CA 94566 (US)**

(74) Representative: **Morrall, Jonathan Ian McLachlan
et al
Kilburn & Strode LLP
Lacon London
84 Theobalds Road
London WC1X 8NL (GB)**

(56) References cited:
**EP-A1- 1 729 471       EP-A1- 2 066 043
EP-A2- 1 928 139       WO-A1-2008/153553
US-A1- 2011 085 589   US-A1- 2011 109 811
US-B1- 6 285 881       US-B1- 6 690 746
US-B1- 7 428 270**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND**

The present invention relates to the acquisition of signals transmitted using a variety of different communication modes.

Current techniques for acquiring communications signals of different communication modes at a single receiver use mode switching (e.g., based on the IEEE 802.15.4g standard). Mode switching allows for a plurality of communication modes to be supported by a single receiver by utilizing a common initial communication mode. For example, as a part of a common initial communication mode between a transmitter and a receiver, a specific communication mode for the signals that are to be subsequently received is provided to the receiver. The receiver is then able to be switched or configured to receive the signals corresponding to that specific communication mode.

EP 2 066 043 A1 describes a cell search method for a multi-mode telecommunication apparatus. The method comprises receiving signals present in a frequency range; transforming received signals into frequency domain; estimating power spectral density from transformed signals; estimating probability of different communication modes by correlating the estimated power spectral density with power spectral density signatures of said different communication modes; and performing cell search according to estimated most probable communication mode.

US 6 285 881 B1 describes a method of locating non-standard control channels in private cellular systems, accomplished by determining the modulation type of a particular channel. The mobile station scans a received RF channel. The received signal is used for the evaluation of the modulation type of that channel by using matched filters designed for the specific signal of interest, and/or in another embodiment of the present invention is used for producing the spectral energy distribution of the channel revealing the type of modulation.

US 2011/085589 describes wireless devices and techniques for system acquisition in an environment of multiple co-existing technologies over a common frequency band. In one aspect, at a remote terminal, a power spectral distribution (PSD) of received signals is sequentially measured in contiguous segments of a frequency band of interest. One or more characteristics of the measured PSD is compared to at least one predetermined metric to identify the presence or absence of at least one technology type of the received signals in frequency locations across the band. A system acquisition operation is performed in accordance with the identification, such as a tailored scan of channels at locations where a desired technology is identified.

US 6 690 746 B1 describes a signal recognizer that has a number of modules that may operate in parallel, each module associated with a different signal type. Each module determines signal parameters by first estimating one or more parameters of a detected signal of interest. The estimated parameter(s) is then used as the basis for demodulating the input signal. The demodulated symbols are used for hypothesis testing, during which the module decides on a candidate signal type for that module. Each module subjects its candidate signal type to a "false alarm" test, which evaluates the likelihood that the signal is not the signal type associated with the module. The resulting confidence data is collected and analyzed to determine a best candidate signal type from among all the modules, together with its signal parameters.

US2011/109811 describes a method of performing a service scan for available channels across a bandwidth of an input signal, the method comprising the steps of: acquiring a power spectrum of the input signal bandwidth; analysing the power spectrum to identify a list of candidate channels, each candidate channel being identified by at least a centre frequency; processing each of the candidate channels in a receiver unit to extract service information, if present, relating to the candidate channel; and storing the service information for the channel in a memory

US7428270 describes a system and method for recognizing the type of modulation embedded in an unknown complex baseband signal, comprising a receiver section for extracting the complex baseband signal from a modulated signal having a carrier frequency, and comprising an orderly series of signal processing functions.

SUMMARY

Although the use of a common initial communication mode can be effective for implementing a receiver that is capable of receiving signals of multiple modes, such a technique has limited applicability due to its strict requirements for common mode operation. Requiring that all initial communication occur using the same common mode is difficult or impossible to enforce, for example, when the signals being exchanged are associated with different communications standards (e.g., IEEE 802.11, IEEE 802.15, IEEE 802.16, etc.). Additionally, requiring a common initial communication mode can also increase the computational resources required for multimode signal acquisition, as well as the power consumed by the receiver.

As such, the invention provides cost-effective devices and methods for the acquisition of signals of different communication modes. For example, the invention provides a multimode receiver that is configured to receive and identify signals employing various communication modes (e.g., phase-shift keying ["PSK"], frequency-shift keying ["FSK"], orthogonal frequency division multiplexing ["OFDM"], quadrature phase-shift keying ["QPSK"], etc.) which may be of various communication standards (e.g., IEEE 802.15.4g, IEEE 802.11, etc.).

An invention is defined in the claims.

In an example which is not claimed but which is useful for understanding the present disclosure, a system is provided for transmitting and receiving signals over a network. The system includes a receiver that is configured for multimode signal acquisition. The receiver includes a filter module, a sampling module, a first analysis module, a second analysis module, and a classification module. The filter module is configured to filter a received signal and to generate a filtered signal. The sampling module is configured to sample the filtered signal and to generate a sampled signal. The first analysis module is configured to analyze at least one characteristic of the sampled signal associated with a first predetermined frequency. The first analysis module is also configured to generate a first output signal associated with the at least one characteristic. The second analysis module is configured to analyze the at least one characteristic of the sampled signal associated with a second predetermined frequency. The second analysis module is also configured to generate a second output signal associated with the at least one characteristic. The classification module is configured to classify the received signal into one of a plurality of different communication modes based on the first output from the first analysis module and the second output from the second analysis module.

In another example which is broader than the claimed subject matter but which is useful for understanding the present disclosure, a method of multimode signal acquisition in a receiver is provided. The method includes receiving a communication signal associated with one of a plurality of different communication modes, sampling the communication signal to generate a sampled signal, and analyzing at least one characteristic of the sampled signal associated with a first predetermined frequency. A first output signal associated with the at least one characteristic is then generated. The method also includes analyzing the at least one characteristic of the sampled signal associated with a second predetermined frequency, generating a second output signal associated with the at least one characteristic, and classifying the received signal into one of the plurality of different communication modes based on the first output signal and the second output signal.

In another example which is broader than the claimed subject matter but which is useful for understanding the present disclosure, a device that is configured to process digital signals is provided. The device includes a filter module, a sampling module, a first analysis module, a second analysis module, and a classification module. The filter module is configured to filter a received signal and to generate a filtered signal. The sampling module is configured to sample the filtered signal and to generate a sampled signal. The first analysis module is configured to analyze a spectral density of the sampled signal associated with a first predetermined frequency. The first analysis module is also configured to generate a first output signal associated with the spectral density for the first predetermined frequency. The second analysis module is configured to analyze the spectral density of the sampled signal associated with a second predetermined frequency. The second analysis module is also configured to generate a second output signal associated with the spectral density for the second predetermined frequency. The classification module is configured to classify the received signal into one of a plurality of different communication modes based on the first output from the first analysis module and the second output from the second analysis module.

In another example which is not claimed but which is useful for understanding the present disclosure, a method of transmitting a plurality of signals of different communication modes to, and receiving the plurality of signals at, a receiver is provided. The method includes transmitting a first signal from a first transmitter to the receiver. The first signal is transmitted according to a first communication mode. The method also includes transmitting a second signal from a second transmitter to the receiver. The second signal is transmitted according to a second communication mode, and the first communication mode is different than the second communication mode. The first signal and the second signal are transmitted to the receiver without a common initial communication mode.

Other aspects of the invention will become apparent by consideration of the detailed description and accompanying drawings.

BRIEF DESCRIPTION OF THE DRAWINGS

Fig. 1 illustrates a communications system according to one embodiment of the invention.

Fig. 2 illustrates a network device according to one embodiment of the invention.

Fig. 3 illustrates a receiver according to one embodiment of the invention.

Fig. 4 is a diagram of a power spectral density estimate for a signal transmitted according to a first communication mode.

Fig. 5 is a diagram of a power spectral density estimate for a signal transmitted according to a second communication mode.

Fig. 6 is a process for acquiring multimode signals according to an embodiment of the invention.

DETAILED DESCRIPTION

Before any embodiments of the invention are explained in detail, it is to be understood that the invention is limited by the appended claims.

Embodiments of the invention relate to devices and methods for multimode signal acquisition within a network, such as a utility communications network. Such systems include, for example, multimode receivers that are configured to efficiently and effectively identify a communication mode for an incoming or received signal with reduced or limited computational (e.g., processing, memory, etc.) and power requirements. The multimode receivers include, among other things, one or more analysis modules for analyzing a characteristic of a received signal (e.g., amplitude, power, power spectral density ["PSD"], etc.) or a portion of the received signal (e.g., a preamble or syncword, header, etc.). Such a multimode receiver can be configured to execute computer readable instructions corresponding to a process for determining or identifying a communication mode of the received signal. The process includes, among other things, receiving a signal (e.g., a modulated analog signal) from another device. The received signal may have been modulated using any of a variety of modulation and/or transmission techniques, such as amplitude shift keying ("ASK"), frequency shift keying ("FSK"), phase shift keying ("PSK"), quadrature amplitude modulation ("QAM"), binary FSK ("BFSK"), minimum FSK ("MSK"), multiple FSK ("MFSK"), differential PSK ("DPSK"), binary PSK ("BPSK"), quadrature PSK ("QPSK"), offset QPSK ("O-QPSK"), orthogonal frequency division multiplexing ("OFDM"), etc. The received analog signal is then filtered using an intermediate frequency ("IF") filter that shifts the frequency of the carrier signal to a lower frequency for processing and analysis.

Following analog-to-digital conversion, the signal is provided to one or more analysis modules which perform frequency analysis on the digital form of the received signal. The frequency analysis can be performed in a number of different ways (e.g., using a Goertzel algorithm). After the characteristics of the signals have been analyzed, the outputs of the analysis modules are provided to a classification module. The classification module compares, for example, a PSD for one or more frequencies of interest specific to the different communication modes to predetermined PSD values at the frequencies of interest for each of the communication modes. Based upon the comparisons of the PSD values for the various communication modes, the communication mode is determined, and the multimode receiver can be configured for the full acquisition of signals transmitted according to the determined communication mode. As such, the communication mode can be determined without requiring additional information to be transmitted through the utility communications network. Additionally, because the communication mode can be determined based on a portion of the received signal (e.g., the preamble) at a relatively low frequency, the frequencies of interest for which analysis is performed can be well-defined and are within a relatively narrow band of frequencies.

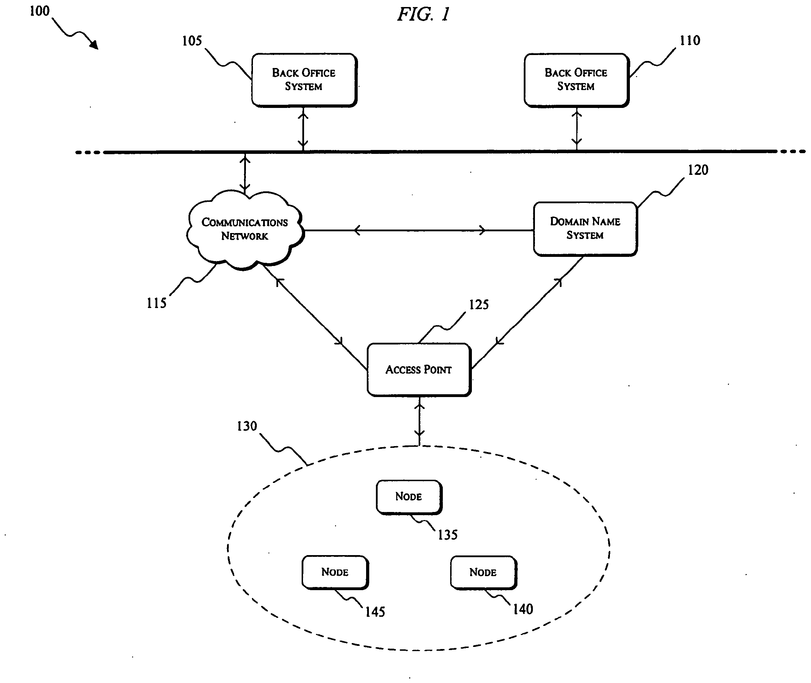

Fig. 1 illustrates a generalized communications system 100 (e.g., a utility communications system or network) that includes a first back office system ("BOS") 105, a second BOS 110, a communications network 115, a domain name system or server ("DNS") 120, an access point 125, a local network 130, and nodes 135-145. The nodes 135-145 communicate through the network 130, such as a local area network ("LAN"), a neighborhood area network ("NAN"), a home area network ("HAN"), or personal area network ("PAN") using any of a variety of communications protocols, such as Wi-Fi, Bluetooth, ZigBee, etc. This network is, in turn, configured for communication with the access point 125, which is also associated with the communications network 115. The communications network 115 is, for example, a wide area network ("WAN") (e.g., a TCP/IP based network, a Global System for Mobile Communications ["GSM"] network, a General Packet Radio Service ["GPRS"] network, a Code Division Multiple Access ["CDMA"] network, an Evolution-Data Optimized ["EV-DO"] network, an Enhanced Data Rates for GSM Evolution ["EDGE"] network, a 3GSM network, a Digital Enhanced Cordless Telecommunications ["DECT"] network, a Digital AMPS ["IS-136/TDMA"] network, an Integrated Digital Enhanced Network ["iDEN"] network, a Digital Advanced Mobile Phone System ["D-AMPS"] network, etc.).

The connections between the nodes 135-145 and the network 130, and the connections between the network 130 and the access point 125 are, for example, wired connections, wireless connections, or a combination of wireless and wired connections. In some embodiments, the nodes 135-145 communicate through the network 130 using wireless communications, and the first access point 125 communicates through the network 130 using a wired network connection.

In some embodiments, the networks described above are, for example, self-configuring or mobile ad hoc networks ("MANETs") which utilize a mesh network topology to provide redundancy to the communications system 100. In other embodiments, the networks have different network topologies, such as ring, star, line, tree, bus, or fully-connected network topologies. In the illustrated embodiment, the networks and the communication between the devices associated with the networks can be protected using one or more encryption techniques, such as those techniques provided in the IEEE 802.1 standard for port-based network security, pre-shared key, Extensible Authentication Protocol ("EAP"), Wired Equivalency Privacy ("WEP"), Temporal Key Integrity Protocol ("TKIP"), Wi-Fi Protected Access ("WPA"), etc.

The DNS 120 connects to network 130 through the access point 125. In other embodiments, the DNS 120 connects to the network 130 through the communications network 115 and then through the access point 125. In some embodiments, the DNS 120 is capable of receiving and processing dynamic updates to provide a dynamic DNS ("DDNS") service. Messages sent from the BOSs 105 and 110 to the nodes 135-145 within the network 130 are sent by way of unique network addresses associated with the one or more nodes and registered with the DNS 120. In some embodiments, the DNS 120 is dedicated to a single LAN, or is shared by a plurality of LANs. The DNS 120 maintains network addresses for the nodes 135-145 and the network 130. The network addresses for the nodes 135-145 are stored or maintained in, for example, a node route registry. In some embodiments, the DNS 120 also maintains address allocation information, such as a node address allocation indicator or node preference indicator. The network registration and communication process for a node within a communications system, such as system 100, is described in greater detail in U.S. Patent Publication No. 2008/0189436, entitled "METHOD AND SYSTEM OF PROVIDING IP-BASED PACKET COMMUNICATIONS IN A UTILITY NETWORK," filed May 24, 2007.

The first BOS 105 and the second BOS 110 are implemented as a single device, a combination of devices, a network management system, a server, one or more computers, one or more network devices, one or more communications devices, one or more software applications, or a variety of components that is/are capable of communicating with one or more of the access point 125 or nodes 135-145 via the communications network 115. The first BOS 105 and the second BOS 110 are, for example, associated with one or more utility providers, credit card companies, other financial institutions, etc.

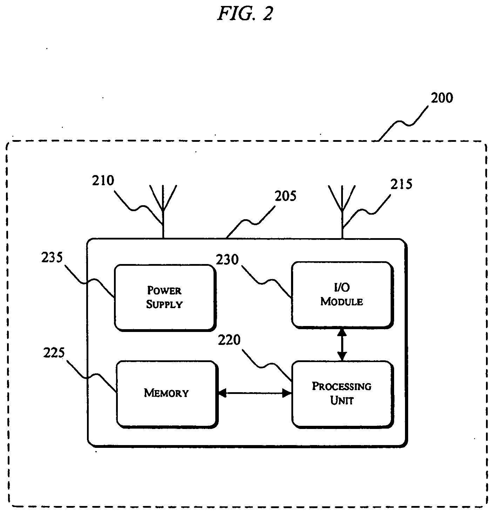

Fig. 2 illustrates a device 200 such as a node, an access point, a BOS, or another component or device of the communications system 100 that includes, among other things, a control unit or controller 205, a first radio 210, and a second radio 215. The device 200 can be configured as a transmitter, a receiver, or both a transmitter and a receiver. The controller 205 includes, for example, a control or processing unit 220, a memory 225, an input/output ("I/O") module 230, a power supply module 235, and one or more busses for operably and communicatively coupling the components within the controller 205. The processing unit 220 is, for example, a processor, a microprocessor, a microcontroller, etc. The memory 225 includes, for example, a read-only memory ("ROM"), a random access memory ("RAM"), an electrically erasable programmable read-only memory ("EEPROM"), a flash memory, a hard disk, an SD card, or another suitable magnetic, optical, physical, or electronic memory device. The I/O module 230 can include routines for sending information to and receiving information from components or devices external to the controller 205 and for transferring information between components within the controller 205. Software included in the implementation of the device 200 can be stored in the memory 225 of the controller 205. The software includes, for example, firmware applications and other executable instructions for performing the methods described herein. In other embodiments, the controller 205 can include additional, fewer, or different components.

The controller 205 can be implemented partially or entirely on one or more semiconductor chips (e.g., an application-specific integrated circuit ["ASIC"], a system-on-a-chip ["SOC"], etc.). In some embodiments, one or more field-programmable gate arrays ["FPGA"] semiconductor chips can be used, such as a chip developed through a register transfer level ("RTL") design process. In various embodiments of the invention, the controller 205 can be implemented at least partially on, for example, one or more printed circuit boards ("PCBs") within the device 200. For example, the PCB is populated with a plurality of electrical and electronic components which provide operational control and protection to the device 200. The PCB also includes, among other things, a plurality of additional passive and active components such as resistors, capacitors, inductors, integrated circuits, and amplifiers. These components are arranged and connected to provide a plurality of electrical functions to the PCB including, among other things, filtering, signal conditioning, and voltage regulation. For descriptive purposes, the PCB and the electrical components populated on the PCB are collectively referred to as the controller 205. The controller 205 receives signals from the radios 210 and 215 or other components within the device 200, conditions and processes the signals, and transmits processed and conditioned signals to, for example, another component or device within the utility communications network 100, etc.

The power supply module 235 includes a power source, such as batteries, a battery pack, a mains power plug, etc. In embodiments of the invention which include batteries, the batteries are alkaline-based or lithium-based batteries and are, for example, disposable or rechargeable AA batteries, AAA batteries, six-volt ("6V") batteries, nine-volt ("9V") batteries, etc.

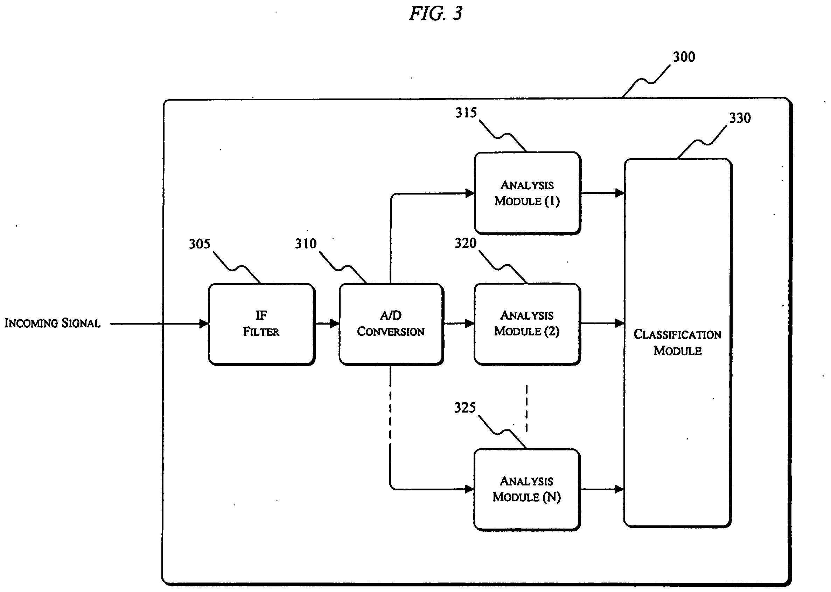

Fig. 3 illustrates a multimode receiver 300 that includes an intermediate frequency ("IF") filter module 305, an analog-to-digital conversion ("ADC") module 310, a first analysis module 315, a second analysis module 320, a third analysis module 325, and a classification module 330. The receiver 300 can, for example, be included in the device 200 and be configured to receive a signal from another device within the communications system 100, determine a corresponding communication mode for the received signal, and be configured to receive signals according the determined communications mode. For example, the receiver 300 is configured for cost-effective, multimode signal acquisition of signals of a plurality of different communication modes that operate within the same frequency band. Such communication modes include, for example, the FSK, OFDM, and O-QPSK communication modes of the IEEE 802.15.4g standard, the IEEE 802.11 standard, etc., operating in the 902MHz-928MHz industrial, scientific, and medical ("ISM") frequency bands.

The IF filter 305 is configured to shift the received signal's carrier frequency to an intermediate range of frequencies that is more suitable for processing and analysis. The filtered output of the IF filter 305 is provided to the ADC module 310 for sampling. The sampled output of the ADC module 310 is then provided to the first analysis module 315, the second analysis module 320, and the third analysis module 325. Although three analysis modules are illustrated, the receiver 300 can include additional or fewer analysis models, depending on the embodiment of the invention. Each of the illustrated analysis modules 315, 320, and 325 is configured to execute one or more frequency analysis processes for determining a characteristic of the received signal (e.g., amplitude, power, PSD, etc.).

In some embodiments, the analysis modules 315, 320, and 325 are configured to analyze the preamble or syncword of a received signal to identify its corresponding communication mode. Generally, the preamble is used to identify the start of the data within a bit stream of data. However, depending on the communication mode in which the data was transmitted, the spectral content of the preamble can vary. As a result, by analyzing specific frequencies or ranges of frequencies related to the received preamble, the corresponding communication mode can be identified. As an illustrative example, each of the analysis modules 315, 320, and 325 is configured to execute instructions stored in, for example, the memory 225 of the controller 205 for performing a Goertzel analysis to identifying characteristics of specific frequency components of the received signal or a portion of the received signal (e.g., the preamble of the received signal). The Goertzel analysis includes executing one or more Goertzel algorithms for various communication modes. Depending on the communication mode, the Goertzel algorithm can be tuned to different frequencies of interest.

For example, in a general implementation, an analysis module executes a Goertzel algorithm to compute a sequence, *s(n),* given an input sequence *x(n),* as shown below in EQN. 1.

$$s(n) = x(n) + 2\cos(2\pi\omega)s(n-1) - s(n-2) \qquad \text{EQN. 1}$$

where s(-2) = s(-1) = 0 and ω is a frequency of interest. The z-transform of EQN. 1 produces EQN. 2 below.

$$\frac{S(z)}{X(z)} = \frac{1}{1 - 2\cos(2\pi\omega)z^{-1} + z^{-2}} = \frac{1}{(1 - e^{+2\pi i\omega}z^{-1})(1 - e^{-2\pi i\omega}z^{-1})} \qquad \text{EQN. 2}$$

Applying an additional finite impulse response ("FIR") transform in the form of EQN. 3 below

$$\frac{Y(z)}{S(z)} = 1 - e^{-2\pi i\omega}z^{-1} \qquad \text{EQN. 3}$$

produces an overall transform as provided in EQN. 4.

$$\frac{Y(z)}{X(z)} = \frac{S(z)}{X(z)}\frac{Y(z)}{S(z)} = \frac{(1 - e^{-2\pi i\omega}z^{-1})}{(1 - e^{+2\pi i\omega}z^{-1})(1 - e^{-2\pi i\omega}z^{-1})} = \frac{1}{(1 - e^{+2\pi i\omega}z^{-1})} \qquad \text{EQN. 4}$$

The above transform and the operation of the analysis modules 315, 320, and 325 can be expanded to identify characteristics of multiple frequencies of interest within the received baseband signal. For example, the Goertzel technique described above can be applied for the FSK modes of the IEEE 802.15.4g standard. These FSK modes have a set of candidate frequencies corresponding to baud rates for the received signal (e.g., 25 kHz, 75 kHz, 100 kHz, 150 kHz, 250 kHz, etc.). In some embodiments, a range or window of frequencies around each of the candidate frequencies is used to allow for variance in the received signals without affecting the identification of the communication mode. Candidate frequencies for other communication modes (e.g., OFDM, QPSK, O-QPSK, etc.) can similarly by identified using the analysis modules 315, 320, and 325. In some embodiments, the analysis modules 315, 320, and 325 can also be used to identify the baud rate of a received signal.

The outputs of each of the analysis modules 315, 320, and 325 are then provided to the classification module 330. The classification module 330 determines the communication mode of the received signal by comparing a value for a characteristic (e.g., amplitude, power, PSD, etc.) of the received signal with one or more expected characteristic values at each candidate frequency for the various communication modes.

For example, the receiver 300 is able to use relationships between the power associated with the received signal at the candidate frequencies and a plurality of communication modes to identify the communication mode of the received signal. For example, the relationships between a power of a received signal at the candidate frequencies and the expected power at the candidate frequencies for each of the plurality of communication modes are stored in memory (e.g., the memory 225). The relationships can be stored as one or more functions, one or more look up tables ("LUTs"), or as a series of thresholds to which the power for particular frequencies may be compared.

With respect to implementations of the invention in which a LUT is used, values of, for example, amplitude, power, PSD, or another characteristic are stored in memory corresponding to a plurality of frequencies of interest for various communication modes. In some embodiments, 8-bit numbers (i.e., 256 values) or 16-bit numbers (i.e., 65,536 values) are used to identify the characteristic value of a received signal at a particular frequency. In some embodiments, the resolution of the characteristic value comparison is based on the resolution of the ADC module 310 used for sampling the received signal. The characteristic value is then used as an input value that is compared to the values stored in the LUT for the various communication modes. The LUT entry or entries that correspond to the characteristic value of the received signal is then identified by the classification module 330. Additional comparisons can be made to determine whether the received signal is associated with a known communication mode. If there is a sufficient correlation between the received signal and the expected characteristic values, the classification module 330 identifies the communication mode of the received signal. A sufficient correlation may be identified using, for example, a predetermined or calculated percent error value, an error range, etc. Additionally or alternatively, the classification module 330 may have to identify a characteristic value at each of the expected frequencies in the received signal before identifying the communication mode. In such embodiments, the identification of the communication mode may not be made if one or more frequencies or frequency components of sufficient amplitude, power, PSD, etc., are not present. With respect to implementations of the invention that use a variety of threshold values, the characteristic value can be compared sequentially to a series of threshold values. The threshold values correspond to values of the characteristic at the specified frequencies that are indicative of a particular communication mode.

If one match to a communication mode is found, then the preamble of a single carrier signal operating at the matching baud rate is likely being received. The device 200 can then be automatically reconfigured for full acquisition of signals transmitted using the identified communication mode (e.g., the preamble for the identified communication mode is then assumed to be received). If multiple matches are found, a multi-carrier signal spanning the detected tones is likely being received. The device 200 can then be automatically reconfigured accordingly for the full acquisition of such signals.

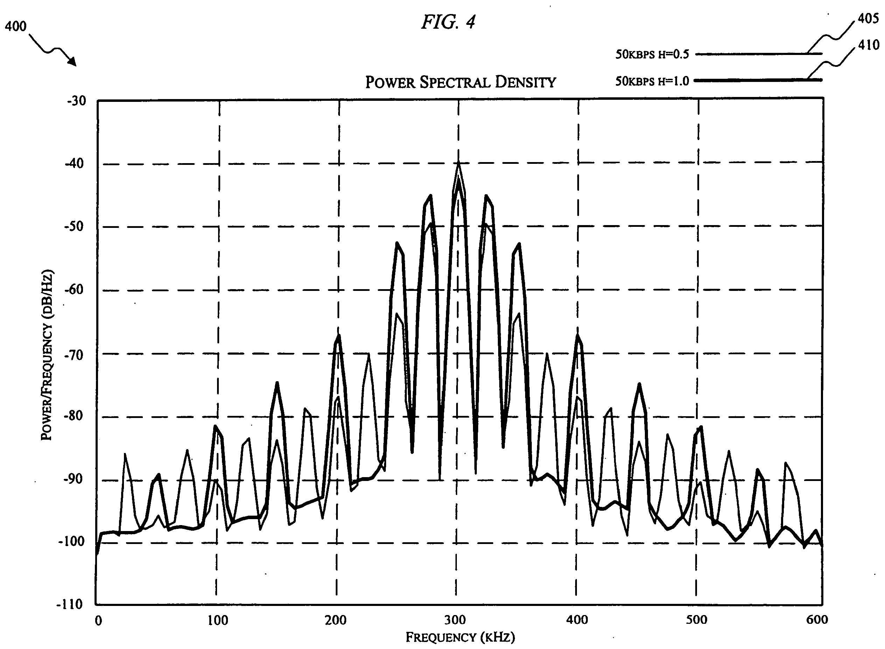

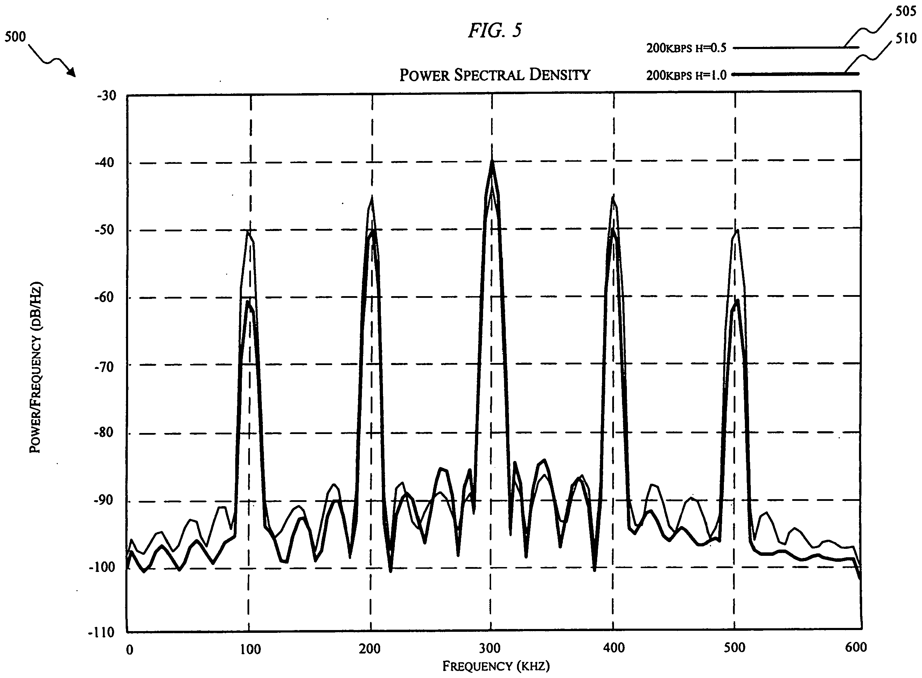

Figs. 4 and 5 illustrate PSD plots 400 and 500, respectively, of two different communication modes. PSD is illustrated in units of power (decibels ["dB"]) per Hertz ("Hz"). In Fig. 4, the PSDs 405 and 410 for a first communication mode and a 50 kbps data link with modulation indices, h, of 0.5 and 1.0, respectively, are shown. In other embodiments, the energy spectral density ("ESD") can be used in place of or in addition to the PSD. As shown in the PSDs 405 and 410, the signal preamble for the illustrated communication mode has characteristic frequency peaks that can be used to identify the communication mode of the received signal. For example, executing a Goertzel algorithm as described above with frequencies of interest at 300 kHz and one or more other frequencies, and then comparing the outputs of the Goertzel algorithm to predetermined power density levels (e.g., -50 dB/Hz), allows the receiver 300 to identify the communication mode. In Fig. 5, the PSDs 505 and 510 for a second communication mode and a 200 kbps data link with modulation indices, h, of 0.5 and 1.0, respectively, are shown. The frequencies of interest for this communication mode may be 100 kHz, 200 kHz, 300 kHz, 400 kHz, and/or 500 kHz. In some embodiments, the number of frequencies of interest used to identify a communication mode can be varied based on, for example, a range of possible frequencies associated with a communication mode. If the output of a corresponding analysis module indicates that the preamble of the received signal includes frequency components at the frequencies of interest that are each above a PSD of, for example, -70 dB/Hz, the associated communication mode can be identified.

By performing a frequency analysis (e.g., Goertzel analysis) of the frequencies associated with a portion of a received signal (e.g., the preamble), and comparing a characteristic (e.g., PSD) at those frequencies to expected characteristic values for various communication modes, the communication mode of the received signal can be quickly and efficiently identified. Such a technique also reduces the computational requirements of the multimode receiver 300, as well as the amount of power that is consumed in determining the communication mode. In some embodiments, automatic gain control ("AGC") can also be performed prior to determining the communication mode.

As an illustrative example, a set of incoming signal samples, x, a vector of desired frequencies, F, and a vector of estimated incoming signal powers, P, at the desired frequencies can be used to classify incoming signals. The vector of desired frequencies, F, corresponds to the baud rates of single-carrier modes of interest and/or the tones of multi-carrier modes of interest. The below pseudo-code is exemplary of an embodiment of the invention for classifying the communication mode of an incoming signal using the Goertzel algorithm. The vector of estimated incoming signal powers, P, is populated by calculating a power value for each of the frequencies of interest in the vector of desired frequencies, F, as shown below.

\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*

```
P = []

For each frequency in F:

{

sample_previous = 0;

sample_previous2 = 0;

coefficient = 2*cos(2*π*frequency);

for each sample, x[n],

        sample = x[n] + coefficient*sample_previous – sample_previous2;

        sample_previous2 = sample_previous;

        sample_previous = sample;

end

power = (sample_previous2*sample_previous2) + (sample_previous*sample_previous) –

(coefficient*sample_previous*sample_previous2);

P = concatenate(P, power);

}
```

\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*

If the power of an incoming signal is greater than a threshold value at exactly one location, j, within the vector of estimated incoming signal powers, P, then a single carrier signal is detected having a corresponding baud rate, F[j]. If the power of an incoming signal is greater than at least one threshold value at multiple locations (e.g., $\{j_l, ..., j_n\}$), then a multi-carrier signal is detected that spans the tones $\{F(j_l, ... j_n)\}$. If the power at a midpoint of the locations $j_l$ and $j_n$ (e.g., between two tones) is less than one or more threshold values, then the detected multi-carrier signal is an OFDM signal. Further processing can also be performed to classify a detected single-carrier signal by analyzing a ratio of the power at a particular frequency (e.g., the frequency at which the signal power is greater than the threshold value) to the power at the frequency corresponding to the carrier signal. Such an analysis can be used to estimate a modulation index of a single-carrier signal modulated using FSK.

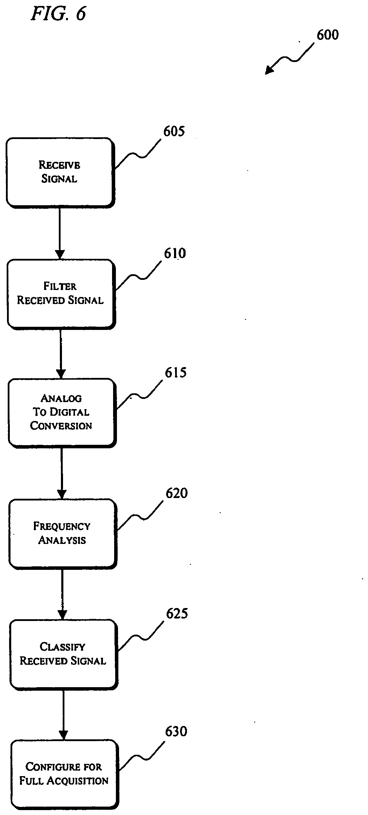

A process 600 for determining a communication mode of a received signal is shown in Fig. 6. The process 600 begins with the reception of a signal (step 605). The signal is, for example, an analog signal that has been transmitted according to a particular modulation or transmission technique, such as FSK, PSK, QPSK, O-QPSK, OFDM, etc., as previously indicated. The received analog signal is then filtered (step 610). Filtering the received analog signal can include the use of an IF filter that shifts the frequency of the carrier signal to a lower frequency for processing and analysis. In some embodiments, the IF filter is associated with a tunable local oscillator ("LO").

Following step 610, the filtered output of the IF filter is provided to an analog-to-digital converter ("ADC") (step 615) for conversion to a digital signal (i.e., sampling). The sampled signal is then provided to one or more analysis modules which perform frequency analysis on the digital form of the received signal (step 620). The frequency analysis can be performed in a number of ways. For example, a Goertzel algorithm, a discrete Fourier transform ("DFT"), a fast Fourier transform ("FFT"), a Cooley-Tukey FFT algorithm, etc. In some embodiments, different frequency analysis techniques can be used to identify different communication modes. The selection of a frequency analysis technique may be based on the factors such as computational complexity, available hardware resources, power requirements, etc. In some embodiments, the Goertzel algorithm is used because it can be tuned to specific frequencies and can be implemented using fewer mathematical operations (e.g., additions, subtractions, multiplications, etc.). Additionally or alternatively, another technique designed to identify or analyze specific frequencies or a narrow band of frequencies can be used to identify the characteristics of the preamble a received signal. As a result, the hardware resources required to implement the multimode receiver can be reduced, the power required to perform the frequency analysis can be reduced, and the amount of time required to complete the analysis can be reduced. The number of analysis modules present in the multimode receiver can vary depending upon the number of different communication modes the receiver is configured to identify (e.g., one analysis module for each communication mode). After the frequency content of the signals has been analyzed, the outputs of the analysis modules are provided to a classification module. The classification module compares a PSD for one or more frequencies of interest specific to the different communication modes to predetermined PSD values at those specific frequencies for each of the communication modes. Based upon the comparisons of the PSD values for the various communication modes, the communication mode is determined (step 625). Following the determination of the communication mode, the multimode receiver is configured (e.g., automatically configured or reconfigured) for the full acquisition of signals transmitted according to the determined communication mode (step 630).

Thus, the invention provides, among other things, systems and methods for acquiring communication signals transmitted according to different communication modes. Various features and advantages of the invention are set forth in the following claims.

**Claims**

1. A device (200, 300) configured to process digital signals, the device (200, 300) comprising:

   a filter module (305) configured to filter a received signal to generate a filtered signal;
   a sampling module configured to sample the filtered signal to generate a sampled signal;
   a first analysis module (315) configured to analyze a power spectral density of the sampled signal associated with a first plurality of predetermined frequencies, the first analysis module (315) configured to generate a first output signal associated with the power spectral density for the first plurality of predetermined frequencies;
   a second analysis module (320) configured to analyze the power spectral density of the sampled signal associated with a second plurality of predetermined frequencies, the second analysis module (320) configured to generate a second output signal associated with the power spectral density for the second plurality of predetermined frequencies, wherein the first plurality of predetermined frequencies is different from the second plurality of predetermined frequencies; and
   a classification module configured to classify the received signal into one of a plurality of different communication modes based on the first output from the first analysis module and the second output from the second analysis module;
   **characterized in that**:

   the first plurality of predetermined frequencies comprises a plurality of windows of frequencies, each window of the plurality arranged around a respective one of the first predetermined frequencies, wherein the first plurality of predetermined frequencies is associated with a first of the plurality of different communication modes; and
   the second plurality of predetermined frequencies comprises a plurality of windows of frequencies, each window of the plurality arranged around a respective one of the second predetermined frequencies, wherein the second plurality of predetermined frequencies is associated with a second of the plurality of different communication modes.

2. The device (200, 300) of claim 1, wherein the first analysis module and the second analysis module (320) are configured to execute a Goertzel algorithm based on the first plurality of predetermined frequencies and the second plurality of predetermined frequencies, respectively.

3. The device (200, 300) of any preceding claim, wherein the device (200, 300) is associated with a node (135, 140, 145) within a utility communications network (130).

4. The device (200, 300) of any preceding claim, wherein the device (200, 300) is implemented as an application specific integrated circuit.

5. A system (100) for transmitting and receiving signals over a network (130), the system comprising:
   a receiver (300) configured for multimode signal acquisition, the receiver including a device according to any of claims 1 to 4.

6. The system (100) of claim 5, further comprising a transmitter.

7. A method of multimode signal acquisition in a receiver (300), the method comprising: receiving (605) a communication signal associated with one of a plurality of different communication modes;

filtering the communication signal to generate a filtered signal; sampling (615) the filtered signal to generate a sampled signal;

analyzing (620) a power spectral density of the sampled signal associated with a first plurality of predetermined frequencies;

generating a first output signal associated with the power spectral density for the first plurality of predetermined frequencies;

analyzing (620) a power spectral density of the sampled signal associated with a second plurality of predetermined frequencies, wherein the first plurality of predetermined frequencies is different than the second plurality of predetermined frequencies;

generating a second output signal associated with the power spectral density for the second plurality of predetermined frequencies; and

classifying the received signal into one of the plurality of different communication modes based on the first output signal and the second output signal;

**characterized in that**:

the first plurality of predetermined frequencies comprises a plurality of windows of frequencies, each window of the plurality arranged around a respective one of the first predetermined frequencies, wherein the first plurality of predetermined frequencies is associated with a first of the plurality of different communication modes; and

the second plurality of predetermined frequencies comprises a plurality of windows of frequencies, each window of the plurality arranged around a respective one of the second predetermined frequencies, wherein the second plurality of predetermined frequencies is associated with a second of the plurality of different communication modes.

8.   The method of claim 7, wherein the first of the plurality of different communication modes and the second of the plurality of different communication modes are each selected from the group consisting of an amplitude shift keying communication mode, a frequency shift keying communication mode, a phase shift keying communication mode, a quadrature amplitude modulation communication mode, a quadrature phase shift keying communication mode, an offset quadrature phase shift keying communication mode, and an orthogonal frequency division multiplexing communication mode.

## Patentansprüche

1.   Vorrichtung (200, 300), die dazu ausgelegt ist, digitale Signale zu verarbeiten, wobei die Vorrichtung (200, 300) Folgendes umfasst:

ein Filtermodul (305), das dazu ausgelegt ist, ein empfangenes Signal zu filtern, um ein gefiltertes Signal zu erzeugen;

ein Abtastmodul, das dazu ausgelegt ist, das gefilterte Signal abzutasten, um ein abgetastetes Signal zu erzeugen;

ein erstes Analysemodul (315), das dazu ausgelegt ist, eine Leistungsspektraldichte des abgetasteten Signals, die mit einer ersten Vielzahl von vorbestimmten Frequenzen verknüpft ist, zu analysieren, wobei das erste Analysemodul (315) dazu ausgelegt ist, ein erstes Ausgangssignal, das mit der Leistungsspektraldichte für die erste Vielzahl von vorbestimmten Frequenzen verknüpft ist, zu erzeugen;

ein zweites Analysemodul (320), das dazu ausgelegt ist, die Leistungsspektraldichte des abgetasteten Signals, die mit einer zweiten Vielzahl von vorbestimmten Frequenzen verknüpft ist, zu analysieren, wobei das zweite Analysemodul (320) dazu ausgelegt ist, ein zweites Ausgangssignal, das mit der Leistungsspektraldichte für die zweite Vielzahl von vorbestimmten Frequenzen verknüpft ist, zu erzeugen, wobei sich die erste Vielzahl von vorbestimmten Frequenzen von der zweiten Vielzahl von vorbestimmten Frequenzen unterscheidet; und

ein Klassifizierungsmodul, das dazu ausgelegt ist, das empfangene Signal auf Basis der ersten Ausgabe vom ersten Analysemodul und der zweiten Ausgabe vom zweiten Analysemodul in einen von einer Vielzahl von verschiedenen Kommunikationsmodi zu klassifizieren;

**dadurch gekennzeichnet, dass**:

die erste Vielzahl von vorbestimmten Frequenzen eine Vielzahl von Fenstern von Frequenzen umfasst, wobei jedes Fenster der Vielzahl um eine jeweilige der ersten vorbestimmten Frequenzen angeordnet ist, wobei die erste Vielzahl von vorbestimmten Frequenzen mit einem ersten der Vielzahl von verschiedenen Kommunikationsmodi verknüpft ist; und

die zweite Vielzahl von vorbestimmten Frequenzen eine Vielzahl von Fenstern von Frequenzen umfasst, wobei jedes Fenster der Vielzahl um eine jeweilige der zweiten vorbestimmten Frequenzen angeordnet ist, wobei die zweite Vielzahl von vorbestimmten Frequenzen mit einem zweiten der Vielzahl von verschiedenen Kommunikationsmodi verknüpft ist.

2. Vorrichtung (200, 300) nach Anspruch 1, wobei das erste Analysemodul und das zweite Analysemodul (320) dazu ausgelegt sind, auf Basis der ersten Vielzahl von vorbestimmten Frequenzen bzw. der zweiten Vielzahl von vorbestimmten Frequenzen einen Goertzel-Algorithmus auszuführen.

3. Vorrichtung (200, 300) nach einem der vorhergehenden Ansprüche, wobei die Vorrichtung (200, 300) mit einem Knoten (135, 140, 145) in einem Versorgungskommunikationsnetzwerk (130) verknüpft ist.

4. Vorrichtung (200, 300) nach einem der vorhergehenden Ansprüche, wobei die Vorrichtung (200, 300) als eine anwendungsspezifische integrierte Schaltung implementiert ist.

5. System (100) zum Übertragen und Empfangen von Signalen über ein Netzwerk (130), wobei das System Folgendes umfasst:
einen Empfänger (300), der für eine Multimodensignalerfassung ausgelegt ist, wobei der Empfänger eine Vorrichtung gemäß einem der Ansprüche 1 bis 4 beinhaltet.

6. System (100) nach Anspruch 5, das ferner einen Sender umfasst.

7. Verfahren der Multimodensignalerfassung in einem Empfänger (300), wobei das Verfahren Folgendes umfasst:

Empfangen (605) eines Kommunikationssignals, das mit einem einer Vielzahl von verschiedenen Kommunikationsmodi verknüpft ist;
Filtern des Kommunikationssignals, um ein gefiltertes Signal zu erzeugen;
Abtasten (615) des gefilterten Signals, um ein abgetastetes Signal zu erzeugen;
Analysieren (620) einer Leistungsspektraldichte des abgetasteten Signals, die mit einer ersten Vielzahl von vorbestimmten Frequenzen verknüpft ist;
Erzeugen eines ersten Ausgangssignals, das mit der Leistungsspektraldichte für die erste Vielzahl von vorbestimmten Frequenzen verknüpft ist;
Analysieren (620) einer Leistungsspektraldichte des abgetasteten Signals, die mit einer zweiten Vielzahl von vorbestimmten Frequenzen verknüpft ist, wobei sich die erste Vielzahl von vorbestimmten Frequenzen von der zweiten Vielzahl von vorbestimmten Frequenzen unterscheidet;
Erzeugen eines zweiten Ausgangssignals, das mit der Leistungsspektraldichte für die zweite Vielzahl von vorbestimmten Frequenzen verknüpft ist; und
Klassifizieren des empfangenen Signals auf Basis des ersten Ausgangssignals und des zweiten Ausgangssignals in einen der Vielzahl von verschiedenen Kommunikationsmodi;
**dadurch gekennzeichnet, dass**:

die erste Vielzahl von vorbestimmten Frequenzen eine Vielzahl von Fenstern von Frequenzen umfasst, wobei jedes Fenster der Vielzahl um eine jeweilige der ersten vorbestimmten Frequenzen angeordnet ist, wobei die erste Vielzahl von vorbestimmten Frequenzen mit einem ersten der Vielzahl von verschiedenen Kommunikationsmodi verknüpft ist; und
die zweite Vielzahl von vorbestimmten Frequenzen eine Vielzahl von Fenstern von Frequenzen umfasst, wobei jedes Fenster der Vielzahl um eine jeweilige der zweiten vorbestimmten Frequenzen angeordnet ist, wobei die zweite Vielzahl von vorbestimmten Frequenzen mit einem zweiten der Vielzahl von verschiedenen Kommunikationsmodi verknüpft ist.

8. Verfahren nach Anspruch 7, wobei der erste der Vielzahl von verschiedenen Kommunikationsmodi und der zweite der Vielzahl von verschiedenen Kommunikationsmodi aus der Gruppe ausgewählt werden, die aus einem Kommunikationsmodus der Amplitudenphasenumtastung, einem Kommunikationsmodus der Frequenzumtastung, einem Kommunikationsmodus der Phasenumtastung, einem Kommunikationsmodus der Quadraturamplitudenmodulation, einem Kommunikationsmodus der Quadraturphasenumtastung, einem Kommunikationsmodus der versetzten Quadraturphasenumtastung und einem Kommunikationsmodus des orthogonalen Frequenzmultiplexing besteht.

**Revendications**

1. Dispositif (200, 300) configuré pour traiter des signaux numériques, le dispositif (200, 300) comprenant :

   un module de filtrage (305) configuré pour filtrer un signal reçu afin de générer un signal filtré ;
   un module d'échantillonnage configuré pour échantillonner le signal filtré afin de générer un signal échantillonné ;
   un premier module d'analyse (315) configuré pour analyser une densité spectrale de puissance du signal échantillonné associée à une première pluralité de fréquences prédéterminées, le premier module d'analyse (315) étant configuré pour générer un premier signal de sortie associé à la densité spectrale de puissance pour la première pluralité de fréquences prédéterminées ;
   un second module d'analyse (320) configuré pour analyser la densité spectrale de puissance du signal échantillonné associé à une seconde pluralité de fréquences prédéterminées, le second module d'analyse (320) étant configuré pour générer un second signal de sortie associé à la densité spectrale de puissance pour la seconde pluralité de fréquences prédéterminées, où la première pluralité de fréquences prédéterminées est différente de la seconde pluralité de fréquences prédéterminées ; et
   un module de classification configuré pour classer le signal reçu dans l'un d'une pluralité de modes de communication différents sur la base de la première sortie du premier module d'analyse et de la seconde sortie du second module d'analyse ;
   **caractérisé en ce que** :

   la première pluralité de fréquences prédéterminées comprend une pluralité de fenêtres de fréquences, chaque fenêtre de la pluralité étant disposée autour d'une fréquence respective parmi les premières fréquences prédéterminées, où la première pluralité de fréquences prédéterminées est associée à un premier mode de communication parmi la pluralité de modes de communication différents ; et
   la seconde pluralité de fréquences prédéterminées comprend une pluralité de fenêtres de fréquences, chaque fenêtre de la pluralité étant disposée autour d'une fréquence respective parmi les secondes fréquences prédéterminées, où la seconde pluralité de fréquences prédéterminées est associée à un second mode de communication parmi la pluralité de modes de communication différents.

2. Dispositif (200, 300) selon la revendication 1, dans lequel le premier module d'analyse et le second module d'analyse (320) sont configurés pour exécuter un algorithme de Goertzel basé sur la première pluralité de fréquences prédéterminées et la seconde pluralité de fréquences prédéterminées, respectivement.

3. Dispositif (200, 300) selon l'une quelconque des revendications précédentes, dans lequel le dispositif (200, 300) est associé à un nœud (135, 140, 145) dans un réseau de communication de services publics (130).

4. Dispositif (200, 300) selon l'une quelconque des revendications précédentes, dans lequel le dispositif (200, 300) est mis en œuvre en tant que circuit intégré spécifique à une application.

5. Système (100) pour transmettre et recevoir des signaux sur un réseau (130), le système comprenant :
   un récepteur (300) configuré pour l'acquisition de signaux multimodes, le récepteur comprenant un dispositif selon l'une quelconque des revendications 1 à 4.

6. Système (100) selon la revendication 5, comprenant en outre un émetteur.

7. Procédé d'acquisition de signaux multimodes dans un récepteur (300), le procédé comprenant :

   la réception (605) d'un signal de communication associé à l'un d'une pluralité de modes de communication différents ;
   le filtrage du signal de communication pour générer un signal filtré ;
   l'échantillonnage (615) du signal filtré pour générer un signal échantillonné ;
   l'analyse (620) d'une densité spectrale de puissance du signal échantillonné associée à une première pluralité de fréquences prédéterminées ;
   la génération d'un premier signal de sortie associé à la densité spectrale de puissance pour la première pluralité de fréquences prédéterminées ;
   l'analyse (620) d'une densité spectrale de puissance du signal échantillonné associée à une seconde pluralité de fréquences prédéterminées, où la première pluralité de fréquences prédéterminées est différente de la seconde pluralité de fréquences prédéterminées ;

la génération d'un second signal de sortie associé à la densité spectrale de puissance pour la seconde pluralité de fréquences prédéterminées ; et

le classement du signal reçu dans l'un de la pluralité de modes de communication différents sur la base du premier signal de sortie et du second signal de sortie ;

**caractérisé en ce que** :

la première pluralité de fréquences prédéterminées comprend une pluralité de fenêtres de fréquences, chaque fenêtre de la pluralité étant disposée autour d'une fréquence respective parmi les premières fréquences prédéterminées, où la première pluralité de fréquences prédéterminées est associée à un premier mode de communication parmi la pluralité de modes de communication différents ; et

la seconde pluralité de fréquences prédéterminées comprend une pluralité de fenêtres de fréquences, chaque fenêtre de la pluralité étant disposée autour d'une fréquence respective parmi les secondes fréquences prédéterminées, où la seconde pluralité de fréquences prédéterminées est associée à un second mode de communication parmi la pluralité de modes de communication différents.

8. Procédé selon la revendication 7, dans lequel le premier de la pluralité de modes de communication différents et le second de la pluralité de modes de communication différents sont chacun sélectionnés dans le groupe constitué d'un mode de communication à modulation par déplacement d'amplitude, d'un mode de communication à modulation par déplacement de fréquence, d'un mode de communication à modulation par déplacement de phase, d'un mode de communication à modulation d'amplitude en quadrature, d'un mode de communication à modulation par déplacement de phase en quadrature, d'un mode de communication à modulation par déplacement de phase en quadrature décalé et d'un mode de communication par multiplexage par répartition orthogonale de la fréquence.

FIG. 1

FIG. 2

200

210        205        215

235        230
POWER
SUPPLY        I/O
MODULE

225        220
MEMORY        PROCESSING
UNIT

FIG. 3

*FIG. 4*

POWER SPECTRAL DENSITY

FIG. 5

POWER SPECTRAL DENSITY

200KBPS H=0.5 ——————— 505
200KBPS H=1.0 ——————— 510

*FIG. 6*

600

605
RECEIVE
SIGNAL

610
FILTER
RECEIVED SIGNAL

615
ANALOG
TO DIGITAL
CONVERSION

620
FREQUENCY
ANALYSIS

625
CLASSIFY
RECEIVED SIGNAL

630
CONFIGURE FOR
FULL ACQUISITION

**EP 2 552 070 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2066043 A1
- US 6285881 B1
- US 2011085589 A
- US 6690746 B1
- US 2011109811 A
- US 7428270 B
- US 20080189436 A